# EUROPEAN PATENT APPLICATION

(11) **EP 4 328 023 A1**
(43) Date of publication of application: **28.02.2024**
(21) Application number: 22791587.3
(22) Date of filing: 04.04.2022
(51) Int. Cl.: B32B 27/30, B41M 1/30, C09D 11/101

(54) **ACTINIC RAY-CURABLE OFFSET PRINTING INK COMPOSITION**

(30) Priority: 19.04.2021 JP 2021070647
(71) Applicant: Sakata INX Corporation, Osaka-shi, Osaka 550-0002 (JP)
(72) Inventor: OMI, Naoki, Osaka-shi, Osaka 550-0002 (JP); NISHIMOTO, Aika, Osaka-shi, Osaka 550-0002 (JP)
(74) Representative: Bryn Aarflot AS
(86) International application number: PCT/JP2022/017055
(87) International publication number: WO 2022/224812

(57) **Abstract**

Provided is an active energy ray-curable offset printing ink composition, comprising an active energy ray-polymerizable compound having a (meth)acryloyl group, wherein a concentration of the (meth)acryloyl group is 2.2 to 4.5 mol/g, and wherein a glass transition temperature of a polymer obtained by polymerizing the active energy ray-polymerizable compound is -20 to 25°C.

## Description

### TECHNICAL FIELD

The present invention relates to an active energy ray-curable offset printing ink composition. More particularly, the present invention relates to an active energy ray-curable offset printing ink composition capable of producing a laminated body having excellent lamination strengths.

### BACKGROUND ART

The active energy ray-curable printing ink composition is excellent in workability because it is instantaneously cured by irradiation with electron beams, ultraviolet rays, or the like. The active energy ray-curable printing ink composition has a low environmental load because it is used without a solvent. Therefore, as shown in Patent Document 1, the active energy ray-curable ink is used as a flexible packaging material such as a food packaging material.

### PRIOR ART DOCUMENT

### Patent Document

Patent Document 1: JP 2020-33465 A

### SUMMARY OF THE INVENTION

However, the ink composition described in Patent Document 1 does not provide sufficient lamination strengths (peel strength, seal strength) of a laminated body.

The present invention has been made in view of such conventional problems, and it is an object of the present invention to provide an active energy ray-curable offset printing ink composition capable of producing a laminated body having excellent lamination strengths.

The active energy ray-curable offset printing ink composition of one aspect of the present invention for solving the above-described problems comprises an active energy ray-polymerizable compound having a (meth)acryloyl group, wherein a concentration of the (meth)acryloyl group is 2.2 to 4.5 mol/g, and wherein a glass transition temperature of a polymer obtained by polymerizing the active energy ray-polymerizable compound is -20 to 25°C.

The laminated body of one aspect of the present invention for solving the above-described problems comprises a printing layer to which the above-described active energy ray-curable offset printing ink composition is applied, wherein the printing layer is provided on a first base material, and wherein a second base material is provided on the printing layer.

### EMBODIMENT FOR CARRYING OUT THE INVENTION

### <Active energy ray-curable offset printing ink composition>

The active energy ray-curable offset printing ink composition (hereinafter also referred to as an ink composition) of one embodiment of the present invention comprises an active energy ray-polymerizable compound having a (meth)acryloyl group. A concentration of the (meth)acryloyl groups is 2.2 to 4.5 mol/g. A glass transition temperature of a polymer obtained by polymerizing the active energy ray-polymerizable compound is -20 to 25°C. Each component will be described below.

### (Active energy ray-polymerizable compound having (meth)acryloyl group)

The ink composition comprises an active energy ray-polymerizable compound having a (meth)acryloyl group. The active energy ray-polymerizable compound having a (meth)acryloyl group is not particularly limited. By way of an example, the active energy ray-polymerizable compound having a (meth)acryloyl group preferably comprises a resin having a (meth)acryloyl group and a polyfunctional (meth)acrylate having an alkylene oxide-derived skeleton. As a result, when the ink composition is applied to a base material and cured, and then a laminated body, on which a film is laminated with an adhesive, is produced, it is more excellent in lamination strength.

### ·Resin having (meth)acryloyl group

The resin having a (meth)acryloyl group is not particularly limited. By way of an example, the resin having a (meth)acryloyl group is an urethane acrylate resin, a polyester acrylate resin, an epoxy acrylate resin, an acrylic resin acrylate, or the like. Among them, the resin having a (meth)acryloyl group preferably includes an urethane acrylate resin. As a result, the ink composition has increased adhesiveness to a base material and increased laminate strengths.

The urethane acrylate resin is not particularly limited. By way of an example, the urethane acrylate resin is a resin obtained by condensing an isocyanate group-containing monomer and a hydroxyl group-containing monomer to obtain an urethane resin, the terminal of which is then modified with an acrylic group or a methacrylic group. Among them, the urethane acrylate resin preferably has an acid value of 3 mgKOH/g or less. Moreover, the urethane acrylate resin preferably includes an aliphatic urethane acrylate resin. Furthermore, the urethane acrylate resin more preferably includes an urethane acrylate resin having an acid value of 3 mgKOH/g or less, and it is further preferably an urethane acrylate resin having no bifunctional acid groups, both terminals of which are modified with an acrylic group or a methacrylic group. As a result, the ink composition can suppress intake of water in the ink which is derived from the acid value and suppress an excessive emulsification rate, which reduces stain of a printed matter during printing. In addition, suppressing the emulsification rate leads to suppressing of the ink film thickness of the printed matter. Suppression of the film thickness also leads to suppression of internal stress after curing of a coating film, so that adhesiveness to the base material and lamination strengths are enhanced.

A mass average molecular weight of the resin having a (meth)acryloyl group is preferably 10,000 or less, more preferably 5,000 or less, and further preferably 2,500 or less. Moreover, the mass average molecular weight of the resin having a (meth)acryloyl group is preferably 500 or more. When the mass average molecular weight of the urethane acrylate resin is within the above-described ranges, a molecular weight of a cured product after reaction is suppressed, and flexibility of the coating film is increased, so that adhesiveness to the base material and lamination strengths are enhanced by suppressing internal stress. The number of functional groups (acryloyl groups) of the urethane acrylate is preferably 2 to 6, and more preferably 2 to 3.

A content of the resin having a (meth)acryloyl group is not particularly limited. By way of an example, the content of the resin having a (meth)acryloyl group is preferably 10% by mass or more, and more preferably 25% by mass or more, in the ink composition. Moreover, the content of the resin having a (meth)acryloyl group is preferably 55% by mass or less, and more preferably 45% by mass or less. When the content of the resin having a (meth)acryloyl group is within the above-described ranges, adhesiveness and lamination strengths are improved.

### ·Polyfunctional (meth)acrylate having alkylene oxide-derived skeleton

The polyfunctional (meth)acrylate having an alkylene oxide-derived skeleton is not particularly limited. By way of an example, the polyfunctional (meth)acrylate having an alkylene oxide-derived skeleton preferably includes an alkylene oxide-modified polyfunctional (meth)acrylate containing 6 to 30 alkylene oxide units in a molecule from the viewpoint that adhesiveness to the base material and laminate strengths can be further improved.

More specifically, the polyfunctional (meth)acrylate having an alkoxy-modified polyfunctional (meth)acrylate alkylene skeleton is di(meth)acrylate of ethylene oxide (4 mol) adduct of propylene glycol, di(meth)acrylate of ethylene oxide (3 mol) adduct of glycerin, tri(meth)acrylate of ethylene oxide (3 mol) adduct of glycerin, di(meth)acrylate of propylene oxide (3 mol) adduct of glycerin, di(meth)acrylate of ethylene oxide (3 mol) adduct of diglycerin, tri(meth)acrylate of ethylene oxide (3 mol) adduct of diglycerin, di(meth)acrylate of propylene oxide (3 mol) adduct of diglycerin, di(meth)acrylate of ethylene oxide (3 mol) adduct of trimethylolpropane, tri(meth)acrylate of ethylene oxide (3 mol) adduct of trimethylolpropane, di(meth)acrylate of propylene oxide (3 mol) adduct of trimethylolpropane, tri(meth)acrylate of propylene oxide (3 mol) adduct of trimethylolpropane, di(meth)acrylate of ethylene oxide (2 mol) adduct of pentaerythritol, tri(meth)acrylate of ethylene oxide (3 mol) adduct of pentaerythritol, tetra(meth)acrylate of ethylene oxide (4 mol) adduct of pentaerythritol, di(meth)acrylate of alkylene oxide (2 mol) adduct of bisphenol, di(meth)acrylate of alkylene oxide (4 mol) adduct of bisphenol, di(meth)acrylate of alkylene oxide (6 mol) adduct of bisphenol, or the like. Moreover, poly(meth)acrylate of polyalkylene glycol is (poly)polyethylene glycol di(meth)acrylates such as ethylene glycol di(meth)acrylate, diethylene glycol di(meth)acrylate, and triethylene glycol diacrylate, (poly)propylene glycol di(meth)acrylates such as propylene glycol di(meth)acrylate, and dipropylene glycol di(meth)acrylate, or the like.
Among them, the polyfunctional (meth)acrylate having an alkylene oxide-derived skeleton preferably includes a multifunctional (meth)acrylate containing 6 to 30 or more alkylene oxide units in the molecule, more preferably includes an alkylene oxide-modified trimethylolpropane triacrylate containing 6 to 30 alkylene oxide units in the molecule. As a result, the ink composition has improved adhesiveness to the base material and lamination strengths.

A content of the polyfunctional (meth)acrylate having an alkylene oxide-derived skeleton is 10% by mass or more, preferably 20% by mass or more, in the ink composition. Moreover, the content of the polyfunctional (meth)acrylate having an alkylene oxide-derived skeleton is 80% by mass or less, preferably 60% by mass or less, in the ink composition. When the content of the polyfunctional (meth)acrylate having an alkylene oxide-derived skeleton is within the above-described ranges, the ink composition has improved adhesiveness to the base material and laminate strengths.

Referring back to the description of the active energy ray-polymerizable compound having a (meth)acryloyl group, a method of producing the active energy ray-polymerizable compound having a (meth)acryloyl group is not particularly limited. By way of an example, the active energy ray-polymerizable compound having a (meth)acryloyl group may be produced by mixing a resin having an acryloyl group and a polyfunctional (meth)acrylate having an alkylene oxide-derived skeleton using a stirrer or the like such as a disper. If the resin having an acryloyl group is solid at a normal temperature, or if stirring is difficult to be performed due to viscosity of the resin itself, the resin may be mixed by heating, etc., as necessary.

A concentration of the (meth)acryloyl group may be 2.2 mol/g or more. Moreover, the concentration of the (meth)acryloyl group may be 4.5 mol/g or less, preferably 3.0 mol/g or less. When the concentration of the (meth)acryloyl group is less than 2.2 mol/g, in a case where the ink composition is applied to the base material and cured, and then a laminated body, on which a film is laminated with an adhesive, is produced, the ink composition is inferior in adhesiveness to the base material and lamination strength in an image area. On the other hand, when the concentration of the (meth)acryloyl group exceeds 4.5 mol/g, in the case where the ink composition is applied to the base material and cured, and then a laminated body, on which a film is laminated with an adhesive, is produced, the ink composition is inferior in adhesiveness to the base material and lamination strength in the image area.

When a polymer is produced by polymerizing an active energy ray-polymerizable compound, a glass transition temperature of the polymer may be -20°C or higher, preferably -5°C or higher. Moreover, the glass transition temperature of the polymer may be 25°C or lower, preferably 20°C or lower. When the glass transition temperature of the polymer is lower than -20°C, the ink composition becomes easy to cause stickiness of the coating film. The stickiness leads to tackiness of the surface, which leads to sticking to a rotating roll (adherence to a guide roll) and generation of wrinkles during a secondary processing (laminate processing) of the printed matter. On the other hand, when the glass transition temperature of the polymer exceeds 25°C, in a case where the ink coating film hardens to bend the base material, cracks are generated on the coating film surface, or the coating film cracks and peels off, in the ink composition.

### (Colorant)

The ink composition of the present embodiment preferably comprises a colorant. The colorant is an organic pigment, an inorganic pigment, or the like for applying a coloring power to the ink composition. Besides, in the present embodiment, the colorant includes a white pigment for making the ink composition white, a metal powder pigment for applying a metallic color such as gold and silver, an inorganic pigment for applying a pearly color, and the like.

By way of an example, the colorant is a yellow pigment such as disazo yellow (Pigment Yellow 12, Pigment Yellow 13, Pigment Yellow 17, and Pigment Yellow 1) and Hansa Yellow, a magenta pigment such as Brilliant Carmine 6B, Lake Red C, and Watching Red, a cyan pigment such as phthalocyanine blue, phthalocyanine green, and alkali blue, a black pigment such as carbon black, a fluorescent pigment, a white pigment such as titanium oxide, gold powder, bronze powder, aluminum paste made from aluminum powder, mica powder, or the like.

When the ink composition comprises a colorant, a content of the colorant is not particularly limited. By way of an example, the content of the colorant is preferably 10% by mass or more in the ink composition. Moreover, the content of the colorant is preferably 70% by mass or less in the ink composition. Besides, when preparing a yellow ink composition using a yellow pigment, a magenta ink composition using a magenta pigment, a cyan ink composition using a cyan pigment, and a black ink composition using a black pigment, a pigment of another color, respectively, may be used in combination, or an ink composition of another color may be added, as a complementary color.

### (Extender pigment)

The ink composition preferably comprises an extender pigment in order to apply viscoelasticity to the ink composition, adjust fluidity, prevent misting, and the like.

The extender pigment is not particularly limited. By way of an example, the extender pigment is clay, talc, mica, kaolinite (kaolin), barium sulfate, magnesium sulfate, calcium carbonate, silicon oxide, aluminum oxide, bentonite, heavy calcium carbonate, barium carbonate, zirconia, alumina, or the like. The extender pigment may be in a form of a powder or in a form of a dispersion dispersed in an appropriate solvent. An average particle size of the extender pigment is preferably 0.001 to 100 µm, more preferably 0.01 to 50 µm, and further preferably 0.05 to 5 µm. A BET specific surface area of the extender pigment is preferably 1 to 350 m²/g, more preferably 10 to 70 m²/g, and further preferably 20 to 50 m²/g.

When the ink composition comprises an extender pigment, a content of the extender pigment is not particularly limited. By way of an example, the content of the extender pigment is preferably more than 0% by mass, and more preferably 1% by mass or more, in the ink composition. Moreover, the content of the extender pigment is preferably 30% by mass or less, and more preferably 15% by mass or less, in the ink composition. When the content of the extender pigment is within the above-described ranges, viscoelasticity and fluidity of the ink composition are easily adjusted, and misting is easily prevented.

### (Metal chelate cross-linking agent)

The ink composition of the present embodiment preferably comprises a metal chelate cross-linking agent. The metal chelate cross-linking agent is not particularly limited. By way of an example, the metal chelate cross-linking agent is an aluminum-based chelating agent, a titanium-based chelating agent, a zirconium-based chelating agent, or the like. Specifically, the metal chelate cross-linking agent is an aluminum-based chelating agent such as aluminum triisopropoxide, aluminum tributoxide, aluminum dipropoxide monoacetylacetate, aluminum diisopropoxide monoethylacetoacetate, aluminum dibutoxide monoacetylacetate, and aluminum triacetylacetate; a titanium-based chelating agent such as tetraisopropoxytitanium, tetrabutoxytitanium, and dipropoxy bis(acetylacetonato)titanium; a zirconium-based chelating agent such as tetrabutoxyzirconium, or the like.

When the ink composition comprises a metal chelate cross-linking agent, a content of the metal chelate cross-linking agent is preferably 0.1% by mass or more, and more preferably 0.5% by mass or more, in the ink composition. Moreover, the content of the metal chelate cross-linking agent is preferably 10% by mass or less, and more preferably 5% by mass or less, in the ink composition. When the content of the metal chelate cross-linking agent is within the above-described ranges, the ink composition has excellent adhesiveness and lamination strengths.

### (Other photopolymerizable compounds)

For the ink composition of the present embodiment, photopolymerizable compounds other than the active energy ray-polymerizable compound having a (meth)acryloyl group may be used in combination as long as the performance is not deteriorated.

### · Monomer

A monofunctional monomer is alkyl acrylate such as methyl (meth)acrylate, ethyl (meth)acrylate, butyl (meth)acrylate, hexyl (meth)acrylate, octyl (meth)acrylate, and dodecyl (meth)acrylate, (meth)acrylic acid, (meth)acrylate of ethylene oxide adduct, (meth)acrylate of propylene oxide adduct, isobornyl (meth)acrylate, cyclohexyl (meth)acrylate, tricyclodecane monomethylol (meth)acrylate, 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, hydroxypentyl (meth)acrylate, 2-hydroxy-3-phenoxypropyl (meth)acrylate, 2-hydroxy-3-butoxypropyl (meth)acrylate, 2-hydroxy-3-methoxypropyl (meth)acrylate, diethylene glycol mono(meth)acrylate, triethylene glycol mono(meth)acrylate, polyethylene glycol mono(meth)acrylate, dipropylene glycol mono(meth)acrylate, polypropylene glycol mono(meth)acrylate, glycerin mono(meth)acrylate, acryloyloxyethyl phthalate, 2-(meth)acryloyloxyethyl-2-hydroxy ethyl phthalate, 2-(meth)acryloyloxypropyl phthalate, β-carboxyethyl (meth)acrylate, (meth)acrylic acid dimer, ω-carboxypolycaprolactone mono(meth)acrylate, dimethylaminoethyl (meth)acrylate, diethylamino ethyl (meth)acrylate, N-vinylpyrrolidone, N-vinylformamide, (meth)acryloylmorpholine, vinylmethyloxaziridinone, or the like.

A bi- or higher functional monomer is a bifunctional monomer such as ethylene glycol di(meth)acrylate, propylene glycol di(meth)acrylate, butylene glycol di(meth)acrylate, pentyl glycol di(meth)acrylate, neopentyl glycol di(meth)acrylate, hydroxypivalic hydroxypivalate di(meth)acrylate, hydroxypivalic hydroxypivalate dicaprolactonate di(meth)acrylate, 1,6-hexanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,2-decanediol di(meth)acrylate, 1,10-decanediol di(meth)acrylate, 1,2-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentanediol di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethylol octane di(meth)acrylate, 2-ethyl-1,3-hexanediol di(meth)acrylate, 2,5-dimethyl-2,5-hexanediol di(meth)acrylate, 2-methyl-1,8-octanediol di(meth)acrylate, 2-butyl-2-ethyl-1,3-propanediol di(meth)acrylate, 2,4-diethyl-1,5-pentanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,2-decanediol di(meth)acrylate, 1,10-decanediol di(meth)acrylate, 1,2-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentanedi(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethyloloctane di(meth)acrylate, 2-ethyl-1,3-hexanediol di(meth)acrylate, 2,5-dimethyl-2,5-hexanediol di(meth)acrylate, 2-butyl-2-ethyl-1,3-propanediol di(meth)acrylate, 2,4-diethyl-1,5-pentanediol di(meth)acrylate tricyclodecanedimethylol di(meth)acrylate, tricyclodecanedimethylol dicaprolactonate di(meth)acrylate, bisphenol A tetraethylene oxide adduct di(meth)acrylate, bisphenol F tetraethylene oxide adduct di(meth)acrylate, bisphenol S tetraethylene oxide adduct di(meth)acrylate, hydrogenated bisphenol A tetraethylene oxide adduct di(meth)acrylate, hydrogenated bisphenol F tetraethylene oxide adduct di(meth)acrylate, hydrogenated bisphenol A di(meth)acrylate, hydrogenated bisphenol F di(meth)acrylate, bisphenol A tetraethylene oxide adduct dicaprolactonate di(meth)acrylate, and bisphenol F tetraethylene oxide adduct dicaprolactonate di(meth)acrylate; a trifunctional monomer such as glycerin tri(meth)acrylate, trimethylolpropane tricaprolactonate tri(meth)acrylate, trimethylolethane tri(meth)acrylate, trimethylolhexane tri(meth)acrylate, trimethyloloctane tri(meth)acrylate, and pentaerythritol tri(meth)acrylate; a tetra- or higher functional monomer such as trimethylolpropane tetra(meth)acrylate, pentaerythritol tetra(meth)acrylate, pentaerythritol tetracaprolactonate tetra(meth)acrylate, diglycerin tetra(meth)acrylate, ditrimethylolpropane tetra(meth)acrylate, ditrimethylolpropane tetracaprolactonate tetra(meth)acrylate, ditrimethylolethane tetra(meth)acrylate, ditrimethylolbutane tetra(meth)acrylate, ditrimethylolhexane tetra(meth)acrylate, ditrimethyloloctane tetra(meth)acrylate, dipentaerythritol penta(meth)acrylate, dipentaerythritol hexa(meth)acrylate, tripentaerythritol hexa(meth)acrylate, tripentaerythritol hepta(meth)acrylate, tripentaerythritol octa(meth)acrylate, and tripentaerythritol polyalkylene oxide hepta(meth)acrylate; or the like.

Moreover, as a kind of monomer, there is an epoxidized vegetable oil acrylate obtained by acryl-modifying an epoxidized vegetable oil. This is a compound obtained by ring-opening addition of (meth)acrylic acid to an epoxy group of an epoxidized vegetable oil obtained by epoxidizing a double bond of an unsaturated vegetable oil with an oxidizing agent such as peracetic acid and perbenzoic acid. The unsaturated vegetable oil refers to a triglyceride in which at least one fatty acid has at least one carbon-carbon unsaturated bond, examples of which include a hempseed oil, a linseed oil, a perilla oil, an oiticica oil, an olive oil, a cacao-seed oil, a kapok oil, a kaya oil, a mustard oil, an apricot kernel oil, a tung oil, a kukui oil, a walnut oil, a poppy oil, a sesame oil, a safflower oil, a radish seed oil, a soybean oil, a chaulmoogra oil, a camellia oil, a corn oil, a rapeseed oil, a nigger oil, a rice bran oil, a palm oil, a castor oil, a sunflower oil, a grape seed oil, an almond oil, a tall oil, a pine seed oil, a cottonseed oil, a coconut oil, a peanut oil, a dehydrated castor oil, and the like. Since this kind of monomer is derived from vegetable oils, it helps increase an amount of biomass components in the ink composition. Various kinds of epoxidized vegetable oil acrylates are commercially available and thus may be used.

### · Oligomer

An oligomer is also used for the purpose of applying appropriate viscosity and elasticity to the ink composition. The oligomer is an epoxy-modified (meth)acrylate, a rosin-modified epoxy acrylate, which are exemplified by an ester of a hydroxyl group and (meth)acrylic acid generated after ring-opening of an epoxy group contained in an epoxy compound such as an epoxy resin with an acid or base, for example, a polyester (meth)acrylate that is prepared from a polyhydric alcohol, a polycarboxylic acid, and an acrylic acid or methacrylic acid, has an ester bond in a main chain, and comprises an acryloyl group or methacryloyl group at the terminal thereof, a polyether-modified (meth)acrylate exemplified by an ester of a terminal hydroxyl group of an polyether compound and (meth)acrylic acid, or the like.

### (Other components)

In addition to the above-described components, other components may be added to the ink composition of the present embodiment, as necessary. Such other components are resin components, polymerization inhibitors, dispersants, salts such as phosphates, waxes such as polyethylene-based waxes, olefin-based waxes, and Fischer-Tropsch waxes, or the like.

The resin components are a variety of resins conventionally used for ink compositions for printing. The resin component is preferably one having compatibility with the above-described photopolymerizable compounds, more preferably a styrene-acrylic resin, an acrylic resin, an alkyd resin, a rosin-modified alkyd resin, a rosin-modified phenol resin, a rosin-modified maleic acid resin, a rosin-modified petroleum resin, a rosin ester resin, a petroleum resin-modified phenol resin, a vegetable oil-modified alkyd resin, a petroleum resin, a diallyl phthalate resin, and the like.

The polymerization inhibitor is preferably a phenol compound such as butylhydroxytoluene, tocopherol acetate, nitrosamine, benzotriazole, hindered amine, or the like, and more preferably butylhydroxytoluene. When a polymerization inhibitor is added to the ink composition, a polymerization reaction is difficult to progress during storage and thickening is easy to be suppressed, in the ink composition. A content of the polymerization inhibitor in the ink composition is about 0.01 to 1% by mass, as an example.

The dispersant is appropriately used for dispersing coloring components and extender pigments contained in the ink composition in favorable state. A variety of dispersants are commercially available, such as, for example, the DISPERBYK (Trade name) series manufactured by BYK Japan KK, and the like.

### (Method of curing printed matter)

The ink composition of the present embodiment can be made into a cured film by irradiating with active energy rays after being printed on the base material. Examples of the active energy rays include ionizing radiation such as ultraviolet rays, electron beams, α rays, β rays, and γ rays. Among them, the active energy rays are preferably electron beams and ultraviolet rays (UV) from the viewpoints of excellent curability and convenience, and more preferably electron beams that use no photopolymerization initiators from the viewpoint of an excellent environmental safety.

Specific energy sources or curing devices include, for example, germicidal lamps, ultraviolet fluorescent lamps, ultraviolet light-emitting diodes (UV-LEDs), carbon arcs, xenon lamps, high-pressure mercury lamps for copying, medium or high pressure mercury lamps, ultra-high pressure mercury lamps, electrodeless lamps, metal halide lamps, ultraviolet rays using natural light as a light source, or electron beams from scanning or curtain type electron beam accelerator, etc.

### (Photopolymerization initiator)

When ultraviolet rays or the like are used as active energy rays, the ink composition preferably comprises a photopolymerization initiator. The photopolymerization initiator is a component that generates radicals upon irradiation with active energy rays, and the generated radicals polymerize a compound having an ethylenically unsaturated bond to cure the ink composition.

The photopolymerization initiator is not particularly limited as long as it generates radicals when irradiated with active energy rays. By way of an example, the photopolymerization initiator is benzophenone, diethylthioxanthone, 2-methyl-1-(4-methylthio)phenyl-2-morpholinopropan-1-one, 4-benzoyl-4'-methyldiphenylsulfide, 1-chloro-4-propoxythioxanthone, isopropylthioxanthone, 2-hydroxy-2-methyl-1-phenylpropan-1-one, 1-hydroxycyclohexylphenylketone, bis-2,6-dimethoxybenzoyl-2,4,4-trimethylpentylphosphine oxide, 1-[4-(2-hydroxyethoxy)-phenyl]-2-hydroxy-2-methyl-1-propane-1-one, 2,2-dimethyl-2-hydroxyacetophenone, 2,2-dimethoxy-2-phenylacetophenone, 2,4,6-trimethylbenzyl-diphenylphosphine oxide, ethoxy(2,4,6-trimethylbenzoyl)phenylphosphine oxide, 2-benzyl-2-dimethylamino-1-(morpholinophenyl)-butane-1-one, or the like. Such photopolymerization initiators are commercially available, and can be obtained, for example, under trade names of Omnirad 907, Omnirad 369, Omnirad 184, Omnirad 379, Omnirad 819, Omnirad TPO, etc. from IGM Resins B.I.V., and DETX, etc. from Lamberti.

When the ink composition comprises a photopolymerization initiator, a content of the photopolymerization initiator is preferably 1% by mass or more, and more preferably 2% by mass or more, in the ink composition. Moreover, the content of the photopolymerization initiator is preferably 20% by mass or less, more preferably 15% by mass or less, and further preferably 13% by mass or less, in the ink composition. When the content of the photopolymerization initiator is within the above-described ranges, the ink composition can achieve both a sufficient curability and a good internal curability, and the cost can also be reduced.

### (Method of producing ink composition)

The ink composition of the present embodiment can be produced by a conventionally known method. For example, the ink composition can be produced by mixing each component and then milling it with a bead mill, three-roll mill, or the like, followed by adding additives (a polymerization inhibitor, wax, etc.) as necessary, and appropriately adjusting the viscosity. The viscosity of the ink composition preferably has a value of 5 to 70 Pa·s at 25°C measured by a Laray viscometer.

### (Method of printing ink composition and method of producing laminated body)

A laminated body can be produced by using the ink composition of the present embodiment. The laminated body of the present embodiment comprises a printing layer to which the ink composition is applied. The printing layer is provided on a first base material. Moreover, a second base material is also provided on the printing layer. In the laminated body, for example, an ink composition other than a white ink composition is printed on a base material film (first base material) such as various resin films and various high-performance barrier films by an offset printing method one or more times to form a colored ink layer (printing layer). Next, the white ink composition is optionally printed on the surface side of the colored ink layer (the lower layer side as viewed from the surface layer after the final lamination) by the offset printing method and cured by active energy rays to obtain a printed matter. A resin film or the like (second base material) is laminated on the layer side of the white ink composition of the obtained printed matter or on the surface side of the single-color ink layer by various laminate processing methods to obtain a laminated body for packaging bag or the like. Besides, in the present embodiment, the first base material, the printing layer, and the second base material may be laminated in this order, and if necessary, another layer may be sandwiched therebetween. For example, an appropriate adhesive layer, deposition layer, or barrier layer may be sandwiched between respective layers.

As the laminate processing method, for example, a laminating method, or a dry laminating method by which an adhesive is applied to the surface of the printed matter and then a film-like polymer is laminated can be utilized. In addition, the dry laminating method is a method of applying an adhesive such as a urethane-based adhesive and an isocyanate-based adhesive to the surface of the layer of the white ink composition, and then laminating a film-like polymer using a known dry laminating machine. Polyethylene, non-stretched polypropylene, or the like can be used as a resin for film used in the dry laminating method. Such a laminated product can be made into a bag and fill contents. The above-described resin film used at this time is not particularly limited. By way of an example, the resin film includes polyester films such as polyethylene terephthalate (PET), polylactic acid, and polycaprolactone, various plastic films for printing such as nylon and vinylon, a film laminated with a barrier layer that is metal-deposited and coated with a barrier resin on these various plastic films for printing, and the like.

As described above, according to the present embodiment, when the ink composition is applied to the base material and cured, and then a laminated body (a laminated body comprising a first base material, a printing layer, and a second base material), on which a film is laminated via an adhesive, is produced, the ink composition is excellent in lamination strength.

In the obtained laminated body, a glass transition temperature of the printing layer (a resin composition constituting the printing layer) is not particularly limited. By way of an example, the glass transition temperature of the printed layer may be -20°C or higher, further preferably -5°C or higher. Moreover, the glass transition temperature may be 25°C or lower, further preferably 20°C or lower. When the glass transition temperature of the printing layer is within the above-described ranges, stickiness of the coating film is reduced. The stickiness leads to tackiness of the surface, and suppression of the stickiness leads to sticking to a rotating roll (adherence to a guide roll) during a secondary processing (laminate processing) of the printed matter, suppression of wrinkles, suppression of "stiffness", etc.

One embodiment of the present invention has been described above. The present invention is not particularly limited to the above-described embodiment. Besides, the above-described embodiment mainly describes an invention having the following configurations.
(1) An active energy ray-curable offset printing ink composition, comprising an active energy ray-polymerizable compound having a (meth)acryloyl group, wherein a concentration of the (meth)acryloyl group is 2.2 to 4.5 mol/g, and wherein a glass transition temperature of a polymer obtained by polymerizing the active energy ray-polymerizable compound is -20 to 25°C.
   According to such a configuration, when the active energy ray-curable offset printing ink composition is applied to the base material and cured, and then a laminated body, on which a film is laminated with an adhesive, is produced, it is excellent in lamination strength.
(2) The active energy ray-curable offset printing ink composition of (1), wherein the active energy ray-polymerizable compound having a (meth)acryloyl group comprises a resin having a (meth)acryloyl group and a polyfunctional (meth)acrylate having an alkylene oxide-derived skeleton.
   According to such a configuration, when the active energy ray-curable offset printing ink composition is applied to the base material and cured, and then a laminated body, on which a film is laminated with an adhesive, is produced, it is more excellent in lamination strength.
(3) The active energy ray-curable offset printing ink composition of (1) or (2), further comprising a colorant.
   According to such a configuration, when the active energy ray-curable offset printing ink composition is applied to the base material and cured, and then a laminated body, on which a film is laminated with an adhesive, is produced, it is more excellent in lamination strength in the image area while realizing a high printing density.
(4) The active energy ray-curable offset printing ink composition of any one of (1) to (3), further comprising an extender pigment.
   According to such a configuration, viscoelasticity and fluidity of the active energy ray-curable offset printing ink composition are easily adjusted, and misting is easily prevented.
(5) The active energy ray-curable offset printing ink composition of any one of (1) to (4), further comprising a metal chelate cross-linking agent.
   According to such a configuration, when the active energy ray-curable offset printing ink composition is applied to the base material and cured, and then a laminated body, on which a film is laminated with an adhesive, is produced, it is more excellent in lamination strength.
(6) The active energy ray-curable offset printing ink composition of (2), wherein the resin having a (meth)acryloyl group includes an urethane acrylate resin.
   According to such a configuration, the active energy ray-curable offset printing ink composition has increased adhesiveness to the base material and increased lamination strengths.
(7) The active energy ray-curable offset printing ink composition of (6), wherein the urethane acrylate resin has an acid value of 3 mgKOH/g or less.
   According to such a configuration, the active energy ray-curable offset printing ink composition can suppress intake of water in the ink which is derived from the acid value and suppress an excessive emulsification rate, which reduces stain of a printed matter during printing. In addition, suppressing the emulsification rate leads to suppressing of the ink film thickness of the printed matter. Suppression of the film thickness also leads to suppression of internal stress after curing of a coating film, so that adhesiveness to the base material and lamination strengths are enhanced.
(8) The active energy ray-curable offset printing ink composition of (6) or (7), wherein the urethane acrylate resin includes an aliphatic urethane acrylate resin.
   According to such a configuration, the active energy ray-curable offset printing ink composition can suppress intake of water in the ink which is derived from the acid value and suppress an excessive emulsification rate, which reduces stain of a printed matter during printing. In addition, suppressing the emulsification rate leads to suppressing of the ink film thickness of the printed matter. Suppression of the film thickness also leads to suppression of internal stress after curing of a coating film, so that adhesiveness to the base material and lamination strengths are enhanced.
(9) The active energy ray-curable offset printing ink composition of (2), wherein the polyfunctional (meth)acrylate having an alkylene oxide-derived skeleton includes an alkylate oxide-modified polyfunctional (meth)acrylate containing 6 to 30 alkylene oxide units in a molecule.
   According to such a configuration, the active energy ray-curable offset printing ink composition has increased adhesiveness to the base material and increased lamination strengths.
(10) A laminated body comprising a printing layer to which the above-described active energy ray-curable offset printing ink composition of any one of (1) to (9) is applied, wherein the printing layer is provided on a first base material, and wherein a second base material is provided on the printing layer.

According to such a configuration, the laminated body has excellent lamination strengths.

### EXAMPLE

Hereinafter, the present invention will be described in more detail with reference to Examples. The present invention is not limited to these Examples. Besides, unless otherwise specified, "%" means "% by mass", and "part" means "part by mass".

### (Examples 1 to 21, Comparative examples 1 to 9)

Based on the formulations shown in Tables 1 and 2, active energy ray-curable offset printing ink compositions of Examples 1-21 and Comparative examples 1-9 were prepared. In preparing the ink composition, raw materials were mixed and kneaded in a three-roll mill.

**Table 1**

| Acid | | Acid value | MW | Number of functional groups | Example | | | | | | | |
|---|---|---|---|---|---|---|---|---|---|---|---|---|
| | | | | | 1 | 2 | 3 | 4 | 5 | 6 | 7 | 8 |
| Pigment | Titanium oxide | - | - | - | 38 | 38 | 38 | 38 | 38 | 38 | 38 | 30 |
| | Phthalocyanine (PB15:3) | - | - | - | - | - | - | - | - | - | - | - |
| | Carbon black | - | - | - | - | - | - | - | - | - | - | - |
| Aliphatic urethane acrylate resin 1 | | 1.5 | 1000 | 2 | 20 | 20 | 25 | - | - | - | 10 | 20 |
| Aliphatic urethane acrylate resin 2 | | 1 | 1000 | 2 | - | - | - | 25 | - | - | - | - |
| Aliphatic urethane acrylate resin 3 | | 2 | 1500 | 2 | - | - | - | - | 25 | - | - | - |
| Aliphatic urethane acrylate resin 4 | | 2 | 1500 | 3 | - | - | - | - | - | 25 | - | - |
| Resin A | | 6 | 35000 | 0 | - | - | - | - | - | - | - | 10 |
| Calcium carbonate T-DD | | - | - | - | 7 | 7 | 5 | 5 | 2 | 2 | 2 | - |
| 3EO-modified TMPTA | | - | 428 | 3 | - | - | - | - | - | - | - | - |
| 6EO-modified TMPTA | | - | 560 | 3 | 35 | 35 | 32 | 32 | 35 | 35 | 50 | 40 |
| 9EO-modified TMPTA | | - | 693 | 3 | - | - | - | - | - | - | - | - |
| 15EO-modified TMPTA | | - | 956 | 3 | - | - | - | - | - | - | - | - |
| THEICTA | | - | 423 | 3 | - | - | - | - | - | - | - | - |
| ALCH | | - | - | - | - | - | - | - | - | - | - | - |

| Acid | | Acid value | MW | Number of functional groups | Example | | | | | | | |
|---|---|---|---|---|---|---|---|---|---|---|---|---|
| | | | | | 1 | 2 | 3 | 4 | 5 | 6 | 7 | 8 |
| Total | | | | | 100 | 100 | 100 | 100 | 100 | 100 | 100 | 100 |
| Viscosity (Pa·s) | | | | | 6 | 6 | 6 | 6 | 4 | 4 | 2 | 20 |
| Concentration of acryloyl group (mmol) | | | | | 2.28 | 2.28 | 2.21 | 2.21 | 2.21 | 2.38 | 2.88 | 2.54 |
| Active energy ray-curable compound Tg (°C) | | | | | 7.2 | 7.0 | 8.3 | 6.5 | 7.5 | 7.1 | 3.2 | 5.2 |

| | | Acid value | MW | Number of functional groups | Example | | | | | | | |
|---|---|---|---|---|---|---|---|---|---|---|---|---|
| | | | | | 9 | 10 | 11 | 12 | 13 | 14 | 15 | |
| Pigment | Titanium oxide | - | - | - | 30 | 38 | 32 | 32 | - | - | - | |
| | Phthalocyanine (PB15:3) | - | - | - | - | - | - | - | 23 | 23 | 23 | |
| | Carbon black | - | - | - | - | - | - | - | - | - | - | |
| Aliphatic urethane acrylate resin 1 | | 1.5 | 1000 | 2 | - | 20 | 25 | 28 | 40 | 40 | 40 | |
| Aliphatic urethane acrylate resin 2 | | 1 | 1000 | 2 | - | - | - | - | - | - | - | |
| Aliphatic urethane acrylate resin 3 | | 2 | 1500 | 2 | 25 | - | - | - | - | - | - | |
| Aliphatic urethane acrylate resin 4 | | 2 | 1500 | 3 | - | - | - | - | - | - | - | |
| Resin A | | 6 | 35000 | 0 | 5 | - | - | - | - | - | - | |
| Calcium carbonate T-DD | | - | - | - | - | 7 | 5 | 10 | 5 | 5 | 8 | |
| 3EO-modified TMPTA | | - | 428 | 3 | - | - | - | 10 | - | - | - | |
| 6EO-modified TMPTA | | - | 560 | 3 | 40 | 30 | 33 | 10 | 32 | 29.5 | 29 | |
| 9EO-modified TMPTA | | - | 693 | 3 | - | 5 | - | 10 | - | - | - | |
| 15EO-modified TMPTA | | - | 956 | 3 | - | - | 5 | - | - | - | - | |
| THEICTA | | - | 423 | 3 | - | - | - | - | - | - | - | |
| ALCH | | - | - | - | - | - | - | - | - | - | - | |
| Total | | | | | 100 | 100 | 100 | 100 | 100 | 97.5 | 100 | |
| Viscosity (Pa·s) | | | | | 20 | 6 | 8 | 6 | 18 | 18 | 18 | |
| Concentration of acryloyl group (mmol) | | | | | 2.48 | 2.22 | 2.42 | 2.23 | 2.51 | 2.44 | 2.35 | |

| | | Acid value | MW | Number of functional groups | Example | | | | | | | |
|---|---|---|---|---|---|---|---|---|---|---|---|---|
| | | | | | 9 | 10 | 11 | 12 | 13 | 14 | 15 | |
| Active energy ray-curable compound Tg (°C) | | | | | 5.3 | 3.1 | -1.2 | 7.2 | 4.9 | 4.8 | 5.7 | |

**Table 2**

| | | Acid value | MW | Number of functional groups | Example | | | | | | | | |
|---|---|---|---|---|---|---|---|---|---|---|---|---|---|
| | | | | | 16 | 17 | 18 | 19 | 20 | 21 | | | |
| Pigment | Titanium oxide | - | - | - | - | - | - | 38 | - | 38 | | | |
| | Phthalocyanine (PB15:3) | - | - | - | 23 | 23 | 23 | - | 10 | - | | | |
| | Carbon black | - | - | - | - | - | - | - | - | - | | | |
| Aliphatic urethane acrylate resin 1 | | 1.5 | 1000 | 2 | - | 34 | 35 | 20 | 20 | 40 | | | |
| Aliphatic urethane acrylate resin 2 | | 1 | 1000 | 2 | 40 | - | - | - | - | - | | | |
| Aliphatic urethane acrylate resin 3 | | 2 | 1500 | 2 | - | - | - | - | - | - | | | |
| Aliphatic urethane acrylate resin 4 | | 2 | 1500 | 3 | - | - | - | - | - | - | | | |
| Resin A | | 6 | 35000 | 0 | - | - | 7 | - | - | - | | | |
| Calcium carbonate T-DD | | - | - | - | 5 | 5 | 5 | 7 | - | 7 | | | |
| 3EO-modified TMPTA | | - | 428 | 3 | - | - | 5 | - | - | - | | | |
| 6EO-modified TMPTA | | - | 560 | 3 | 29 | 33 | 20 | 35 | 70 | 10 | | | |
| 9EO-modified TMPTA | | - | 693 | 3 | - | - | 5 | - | - | - | | | |
| 15EO-modified TMPTA | | - | 956 | 3 | - | 5 | - | - | - | - | | | |
| THEICTA | | - | 423 | 3 | - | - | - | - | - | 5 | | | |
| ALCH | | - | - | - | - | - | - | 1 | - | - | | | |

| | | Acid value | MW | Number of functional groups | Example | | | | | | | | |
|---|---|---|---|---|---|---|---|---|---|---|---|---|---|
| | | | | | 16 | 17 | 18 | 19 | 20 | 21 | | | |
| Total | | | | | 97 | 100 | 100 | 101 | 100 | 100 | | | |
| Viscosity (Pa·s) | | | | | 18 | 18 | 25 | 6 | 2 | 5 | | | |
| Concentration of acryloyl group (mmol) | | | | | 2.43 | 2.60 | 2.34 | 2.25 | 4.15 | 1.69 | | | |
| Active energy ray-curable compound Tg (°C) | | | | | 4.3 | -0.6 | 4.9 | 7.2 | -3.5 | 25 | | | |

| | | Acid value | MW | Number of functional groups | Comparative example | | | | | | | | |
|---|---|---|---|---|---|---|---|---|---|---|---|---|---|
| | | | | | 1 | 2 | 3 | 4 | 5 | 6 | 7 | 8 | 9 |
| Pigment | Titanium oxide | - | - | - | 32 | - | 32 | - | 32 | 32 | 32 | 38 | 38 |
| | Phthalocyanine (PB15:3) | - | - | - | - | 23 | - | 23 | - | - | - | - | - |
| | Carbon black | - | - | - | - | - | - | - | - | - | - | - | - |
| Aliphatic urethane acrylate resin 1 | | 1.5 | 1000 | 2 | 43 | 52 | - | - | 43 | 48 | 60 | 10 | 38 |
| Aliphatic urethane acrylate resin 2 | | 1 | 1000 | 2 | - | - | - | - | - | - | - | - | - |
| Aliphatic urethane acrylate resin 3 | | 2 | 1500 | 2 | - | - | 44 | 43 | - | - | - | - | - |
| Aliphatic urethane acrylate resin 4 | | 2 | 1500 | 3 | - | - | - | - | - | - | - | - | - |
| Resin A | | 6 | 35000 | 0 | - | - | - | - | - | - | - | - | - |
| Calcium carbonate T-DD | | - | - | - | 5 | 5 | 5 | 5 | 5 | 5 | 5 | 2 | 7 |
| 3EO-modified TMPTA | | - | 428 | 3 | - | - | - | - | - | 15 | 0 | - | - |
| 6EO-modified TMPTA | | - | 560 | 3 | 20 | 20 | 19 | 29 | 20.95 | - | - | 50 | 10 |
| 9EO-modified TMPTA | | - | 693 | 3 | - | - | - | - | - | - | - | - | - |
| 15EO-modified TMPTA | | - | 956 | 3 | - | - | - | - | - | - | - | - | - |
| THEICTA | | - | 423 | 3 | - | - | - | - | - | - | - | - | 7 |
| ALCH | | - | - | - | - | - | - | - | - | - | - | - | - |
| Total | | | | | 100 | 100 | 100 | 100 | 100.95 | 100 | 97 | 100 | 100 |
| Viscosity (Pa·s) | | | | | 6 | 18 | 6 | 18 | 6 | 6 | 6 | 4 | 5 |
| Concentration of acryloyl group (mmol) | | | | | 1.93 | 2.11 | 1.60 | 2.13 | 1.96 | 2.01 | 1.24 | 2.88 | 1.79 |
| Active energy ray-curable compound Tg (°C) | | | | | 6.9 | 4.7 | 7.2 | 4.9 | 4.9 | 4.9 | 4.9 | -25 | 26 |

Raw materials used are as follows.
(Resin having (meth)acryloyl group)

**Table 3**

| | Number of functional groups | Average molecular weight (Mw) | Cured product Tg (°C) | Acid value (mgKOH/g) |
|---|---|---|---|---|
| Aliphatic urethane acrylate resin 1 | 2 | 2000 | 18 | 1.5 |
| Aliphatic urethane acrylate resin 2 | 2 | 2500 | 14 | 1.0 |
| Aliphatic urethane acrylate resin 3 | 2 | 500 | 14 | 1.0 |
| Aliphatic urethane acrylate resin 4 | 2 | 2000 | 15 | 5.0 |

### Resin A: Rosin-modified alkyd resin

800 parts of coconut oil and 36 parts of pentaerythritol were compounded in a reaction vessel equipped with a stirrer, a reflux condenser, and a thermometer, and held at 250°C for 1 hour to carry out transesterification reaction. The mixture was cooled to 150°C, to which 160 parts of rosin, 50 parts of isophthalic acid, and further a reflux xylene were then added, which were gradually heated to 250°C and held for 6 hours to carry out polycondensation reaction while dehydrating them. Furthermore, in order to desolvate xylene, reaction was performed under reduced pressure for 3 hours to distill off the solvent, thereby obtaining a rosin-modified alkyd resin having an acid value of 13 mgKOH/g, an sp value of 9.74 as measured by a suspension- and-drip method, and a weight-average molecular weight (Mw) of 7,000 as measured by GPC.

Tables 1 and 2 show properties of each resin.
(Polyfunctional (meth)acrylate having alkylene oxide-derived skeleton)
   3EO-TMPTA: TMPTA having 3 EO units in one molecule
   6EO-TMPTA: TMPTA M-3160 having 6 EO units in one molecule
   9EO-TMPTA: TMPTA M3190 having 9 EO units in one molecule
   15EO-TMPTA: TMPTA M3150 having 15 EO units in one molecule
(Trifunctional acrylic monomer)
   THEICTA (CAS. NO 40220-08-4): MIRAMER M370 (MIWON), Tg: 272°C
(Colorant)
   Titanium oxide: CR-80 manufactured by ISHIHARA SANGYO KAISHA, LTD.
   Phthalocyanine: PB15:3 LIONOL BLUE FG-7330 manufactured by TOYOCOLOR CO., LTD.
   Carbon black: Mogul E manufactured by Cabot Japan K.K.
(Extender pigment)
   Calcium carbonate: T-DD manufactured by SHIRAISHI CALCIUM KAISHA, LTD.)
(Metal chelate cross-linking agent)
   ALCH: Aluminum ethyl acetoacetate diisopropylate manufactured by Kawaken Fine Chemicals Co., Ltd.

### (Method of manufacturing laminated body)

0.1 cc of ink compositions were transferred onto a base material film (PET film, S46 (12 µm), manufactured by POLYPLEX CORPORATION LIMITED) and a base material film (OPP film, P-2161 (20 µm), manufactured by TOYOBO CO., LTD.), respectively, with a simple drawdown machine (RI tester, manufactured by Houei Co., Ltd.) and irradiated with electron beams at a conveyor speed of 10 m/min using an electron beam curing device (EC90, manufactured by IWASAKI ELECTRIC CO., LTD.) (accelerating voltage: 90 kV, irradiation dose: 30 kGy) to obtain a printed matter having a cured ink film. An adhesive (TAKELAC A969V/TAKENATE A-5, coating amount: 3.0 g/m²) was applied, and a CPP film (L-4104, manufactured by TOYOBO CO., LTD., also referred to as a sealant, see Tables 4 to 7) was laminated with a dry laminator to obtain a laminated product. The laminated product was then held at 40°C for 3 days to obtain a film laminated body of sealant/adhesive/cured ink film/base material.

Lamination strength (peel strength) and seal strength of each laminated body obtained were measured by the following methods. The results are shown in Tables 4 and 5 for peel strength and Tables 6 and 7 for seal strength.

### (Lamination strength (peel strength))

An adhesive (TAKELAC A969V/TAKENATE A-5) was applied to a printed surface so as to have 3 g/m² as a solid content, and a film was laminated using the dry laminator to obtain a laminated body. The laminated body was then held at 40°C for 3 days. This laminated body was cut into a sample piece having a width of 15 mm, and a T-shaped peel strength was measured using an exfoliation tester manufactured by YASUDA SEIKI SEISAKUSHO, LTD. The evaluation result is an actual value of strength (N/15 mm). Besides, the alphabets in the tables indicate a position of a peeling interface or the like. B is peeling between a base and an ink, S is peeling between an ink and a sealant, F is film breakage, and C is ink coagulation.

### (Seal strength test)

The above-described laminated body was cut into a piece with a width of 15 mm and a length of 100 mm, folded up into a width of 15 mm and a length of 50 mm with the sealant film side being inside, and heat-sealed so that a portion of 25 mm from the end is centered with an impulse sealer (manufactured by FUJIIMPULSE CO., LTD., seal width: 10 mm) to produce a test piece for seal strength test. The test piece was mounted on the exfoliation tester manufactured by YASUDA SEIKI SEISAKUSHO, LTD., and strength (seal strength) when it was broken at a peeling speed of 300 mm/min was measured. The evaluation result is an actual value of strength (N/15 mm). Besides, the alphabets in the tables indicate a position of a peeling interface or the like. B is peeling between a base and an ink, S is peeling between an ink and a sealant, F is film breakage, and C is ink coagulation.

**Table 4**

| Adhesive | | TAKELAC A969V/TAKENATE A-5 | | | | | | | | | | | | | | |
|---|---|---|---|---|---|---|---|---|---|---|---|---|---|---|---|---|
| Sealant layer | | CPP | | | | | | | | | | | | | | |
| Base material | | Example | | | | | | | | | | | | | | |
| | | 1 | 2 | 3 | 4 | 5 | 6 | 7 | 8 | 9 | 10 | 11 | 12 | 13 | 14 | 15 |
| P-2161 | Color part | 2.1F | 2.4F | 2.5F | 2.5F | 2.3F | 2.0F | 1.9F | 2.5F | 2.0F | 2.4F | 2.3F | 2.4F | 2.9F | 2.6F | 2.0F |
| S46 PET film (manufactured by POLYPLEX CORPORATION LIMITED) | Color part | 2.0F | 2.2F | 1.8F | 1.0F | 2.1F | 1.8 F | 1.5F | 1.6F | 1.0F | 1.8F | 2.0F | 2.0F | 2.1F | 1.5F | 1.3F |

**Table 5**

| Adhesive | | TAKELAC A969V/TAKENATE A-5 | | | | | | | | | | | | | | |
|---|---|---|---|---|---|---|---|---|---|---|---|---|---|---|---|---|
| Sealant layer | | CPP | | | | | | | | | | | | | | |
| Base material | | Example | | | | | | Comparative example | | | | | | | | |
| | | 16 | 17 | 18 | 19 | 20 | 21 | 1 | 2 | 3 | 4 | 5 | 6 | 7 | 8 | 9 |
| P-2161 | Color part | 2.5F | 2.2F | 2.5F | 2.0F | 2.6F | 2.4F | 0.8B | 0.6B | 0.6B | 1.1B | 0.4B | 0.5B | 0.5B | 0.5B | 0.5B |
| S46 PET film (manufactured by POLYPLEX CORPORATION LIMITED) | Color part | 2.1F | 2.1F | 2.0F | 2.0F | 1.3F | 1.8F | 0.5B | 0.5B | 0.6B | 0.6B | 0.6B | 0.6B | 0.6B | 0.6B | 0.6B |

**Table 6**

| Adhesive | | TAKELAC A969V/TAKENATE A-5 | | | | | | | | | | | | | | |
|---|---|---|---|---|---|---|---|---|---|---|---|---|---|---|---|---|
| Sealant layer | | CPP | | | | | | | | | | | | | | |
| Base material | | Example | | | | | | | | | | | | | | |
| | | 1 | 2 | 3 | 4 | 5 | 6 | 7 | 8 | 9 | 10 | 11 | 12 | 13 | 14 | 15 |
| P-2161 | Color part | 35.0F | 38.0F | 34.0F | 35.0F | 38.0F | 29.0F | 20.0F | 35.0F | 22.0F | 29.0F | 38.0F | 32.0F | 22.0F | 35.0F | 32.0F |
| S46 PET film (manufactured by POLYPLEX CORPORATION LIMITED) | Color part | 25.0F | 28.0F | 33.0F | 31.0F | 29.0F | 29.0F | 28.0F | 32.0F | 29.0F | 29.0F | 24.0F | 35.0F | 28.0F | 23.0F | 30.0F |

**Table 7**

| Adhesive | | TAKELAC A969V/TAKENATE A-5 | | | | | | | | | | | | | | |
|---|---|---|---|---|---|---|---|---|---|---|---|---|---|---|---|---|
| Sealant layer | | CPP | | | | | | | | | | | | | | |
| Base material | | Example | | | | | | Comparative example | | | | | | | | |
| | | 16 | 17 | 18 | 19 | 20 | 21 | 1 | 2 | 3 | 4 | 5 | 6 | 7 | 8 | 9 |
| P-2161 | Color part | 31.0F | 22.0F | 35.0F | 32.0F | 32.0F | 32.1F | 0.6B | 1.0B | 1.0B | 1.0B | 1.4B | 1.4B | 1.0B | 1.0B | 1.0B |
| S46 PET film (manufactured by POLYPLEX CORPORATION LIMITED) | Color part | 30.0F | 27.0F | 21.0F | 30.0F | 30.0F | 30.1F | 0.6B | 1.5B | 1.0B | 1.3B | 1.3B | 1.3B | 1.4B | 1.4B | 1.4B |

As shown in Tables 4 to 7, when the ink compositions of Examples 1 to 21 of the present invention were used, lamination strength (peel strength) and seal strength were excellent.

## Claims

1. An active energy ray-curable offset printing ink composition, comprising an active energy ray-polymerizable compound having a (meth)acryloyl group,
wherein a concentration of the (meth)acryloyl group is 2.2 to 4.5 mol/g, and
wherein a glass transition temperature of a polymer obtained by polymerizing the active energy ray-polymerizable compound is -20 to 25°C.

2. The active energy ray-curable offset printing ink composition of claim 1, wherein the active energy ray-polymerizable compound having a (meth)acryloyl group comprises a resin having a (meth)acryloyl group and a polyfunctional (meth)acrylate having an alkylene oxide-derived skeleton.

3. The active energy ray-curable offset printing ink composition of claim 1 or 2, further comprising a colorant.

4. The active energy ray-curable offset printing ink composition of any one of claims 1 to 3, further comprising an extender pigment.

5. The active energy ray-curable offset printing ink composition of any one of claims 1 to 4, further comprising a metal chelate cross-linking agent.

6. The active energy ray-curable offset printing ink composition of claim 2, wherein the resin having a (meth)acryloyl group includes an urethane acrylate resin.

7. The active energy ray-curable offset printing ink composition of claim 6, wherein the urethane acrylate resin has an acid value of 3 mgKOH/g or less.

8. The active energy ray-curable offset printing ink composition of claim 6 or 7, wherein the urethane acrylate resin includes an aliphatic urethane acrylate resin.

9. The active energy ray-curable offset printing ink composition of claim 2, wherein the polyfunctional (meth)acrylate having an alkylene oxide-derived skeleton includes an alkylate oxide-modified polyfunctional (meth)acrylate containing 6 to 30 alkylene oxide units in a molecule.

10. A laminated body, comprising a printing layer to which the active energy ray-curable offset printing ink composition of any one of claims 1 to 9 is applied,
wherein the printing layer is provided on a first base material, and
wherein a second base material is provided on the printing layer.
